# EUROPÄISCHE PATENTSCHRIFT

(11) **EP 0 462 324 B1**
(45) Veröffentlichungstag und Bekanntmachung des Hinweises auf die Patenterteilung: **21.06.1995**
(21) Anmeldenummer: 90125831.9
(22) Anmeldetag: 31.12.1990
(51) Int. Cl.: B23B 5/12

(54) **Spanneinrichtung zum gezielten Spannen von Werkstücken**
Clamping device for clamping work-pieces
Dispositif de serrage pour le serrage de pièces à usiner

(30) Priorität: 16.06.1990 DE 4019285
(43) Veröffentlichungstag der Anmeldung: 27.12.1991
(73) Patentinhaber: Th. Kieserling & Albrecht GmbH & Co., 42651 Solingen (DE)
(72) Erfinder: Glomb, Reiner, Dipl.-Ing., W-5620 Velbert (DE); Maresch, Peter, Dipl.-Ing., W-5650 Solingen (DE); Wagner, Ralf, Dipl.-Ing., W-5650 Solingen 1 (DE); Horlitz, Bernhard, Dipl.-Ing., W-5650 Solingen (DE)
(74) Vertreter: Stachow, Ernst-Walther, Prof. Dr.

(56) Entgegenhaltungen:
- EP-A- 0 348 719
- DE-A- 2 105 266
- DE-B- 1 252 036
- GB-A- 1 020 070

## Beschreibung

Die Erfindung betrifft eine Spannvorrichtung zum gezielten Spannen von unterschiedlich großen Werkstücken, mit einem in einem Rahmen bewegbaren ersten Spannelement und einem im Rahmen bewegbaren zweiten Spannelement, wobei das erste Spannelement und das zweite Spannelement das Werkstück auf dessen gegenüberliegenden Seiten einspannen, mit mindestens einem Trieborgan, das zum Bewegen des ersten Spannelementes mit einer ersten Kraft und zum Bewegen des zweiten Spannelementes mit einer zweiten Kraft am Rahmen befestigt ist, mit Synchronisationsmitteln zur Synchronisation der Bewegung der beiden Spannelemente gegen das Werkstück, wobei die Synchronisationsmittel mit jedem der Spannelemente verbunden sind und ein Teil der Spannkraft durch die Synchronisationsmittel derart übertragen wird, daß die von den Spannelementen ausgeübten Kräfte gleich groß sind.

Eine gattungsgemäße Spannvorrichtung ist beispielsweise aus der DE-PS 21 05 266 bekannt. Bei dieser Spannvorrichtung werden die Spannelemente mit Hilfe von Hydraulikzylindern oder einer antreibbaren Gewindestange mit gegenläufigem Gewinde mit gleichen Kräften gegen das Werkstück gedrückt.

Nachteilig bei dieser Spannvorrichtung ist, daß die Mittenführung des Werkstückes durch die immer vorhandenen Toleranzen der Synchronisationsmittel Spiel hat und demzufolge Vibrationen des Werkstückes möglich sind. Insbesondere nach längerem Gebrauch der Spannvorrichtung kann dieses Spiel zu einer Beeinträchtigung des Bearbeitungsergebnisses des Werkstückes führen, wenn die Spannvorrichtung beispielsweise in einer schnellaufenden Schälmaschine eingebaut ist.

Der Erfindung liegt die Aufgabe zugrunde, ein spielfreies Positionieren bzw. Einspannen des Werkstückes zu ermöglichen.

Diese Aufgabe wird bei einer Spannvorrichtung der eingangs genannten Art dadurch gelöst, daß die erste Kraft und die zweite Kraft unterschiedlich groß sind. Dadurch wird das Spiel in den Synchronisationsmitteln der Spannelemente beseitigt.

In einer bevorzugten Ausgestaltung der Erfindung gemäß Anspruch 2 reicht beispielsweise eine Vorspannungskraft für die Synchronisationsmittel von weniger als 20 %, also einem Fünftel der Spannkraft aus, um zu verhindern, daß das System der Spannelemente mit dem eingespannten Werkstück in seiner Gesamtheit durch das Spiel in den Synchronisationsmitteln in Schwingungen gerät.

Das zusätzliche Trieborgan gemäß Anspruch 3 kann in einem zusätzlichen Zylinder, einer Feder oder einem Gewicht bestehen. Vorzugweise ist an einen Zylinder gedacht. Das Trieborgan stützt sich am Rahmen der Spannvorrichtung ab und drückt gegen ein Spannelement und spannt dabei die Synchronisationsmittel vor.

Um die erste und die zweite Kraft entsprechend unterschiedlich groß zu machen, können die Zylinderflächen der Trieborgane variiert werden, so daß beide Zylinder zum Beispiel mit dem gleichen Druck beaufschlagt werden können. Alternativ können auch gleiche Zylinder für beide Spannelemente Anwendung finden, wenn dann über eine Druckdifferenz eine Verspannung der gesamten Spanneinrichtung erreicht wird. Auch Mischformen liegen im Rahmen der Erfindung.

Die Erfindung soll vorzugsweise Anwendung finden bei Schälmaschinen und dort an der einlaufseitigen oder auslaufseitigen Spann- und Transporteinrichtung realisiert werden. Da die einlaufseitige Spann- und Transporteinheit näher am Messerkopf angeordnet ist und deshalb der Schwingungseinfluß und/oder die Bedeutung eines Versatzes dort größer ist, kommt die erfindungsgemäß ausgeführte Spannvorrichtung in erster Linie dort zum Einsatz. Dabei weisen die Spannelemente zum Beispiel jeweils eine Spannrolle auf.

Bei einem Einsatz der Erfindung an dem auslaufseitig des Messerkopfes angeordneten Spannwagen entsprechen die dort üblicherweise vorgesehenen Spannbacken den Spannelementen.

Zur Einstellung der tatsächlichen Spannlage ist nach Anspruch 6 eine Justiervorrichtung vorgesehen, mit der die tatsächliche Spannlage des Werkstücks in der Spannebene bestimmt wird, wobei auch ein Verschleiß bei den Synchronisationsmitteln ausgeglichen werden kann.

Ausführungsbeispiele der Erfindung werden im einzelnen anhand der in der Zeichnung wiedergegebenen bevorzugten Anwendung auf eine Schälmaschine erläutert. Dabei zeigen:
- Fig. 1:: Eine schematische Darstellung einer Schälmaschine,
- Fig. 2 :: eine Spanneinrichtung als Einschubapparat an einer Schälmaschine gem. Linie II-II in Fig.1
- Fig. 3 :: eine alternative Ausführungsform zu Fig.2,
- Fig. 4 :: eine weiter alternative Ausführungsform zu Fig.2,
- Fig. 5 :: eine Spanneinrichtung als Spannwagen einer Schälmaschine,

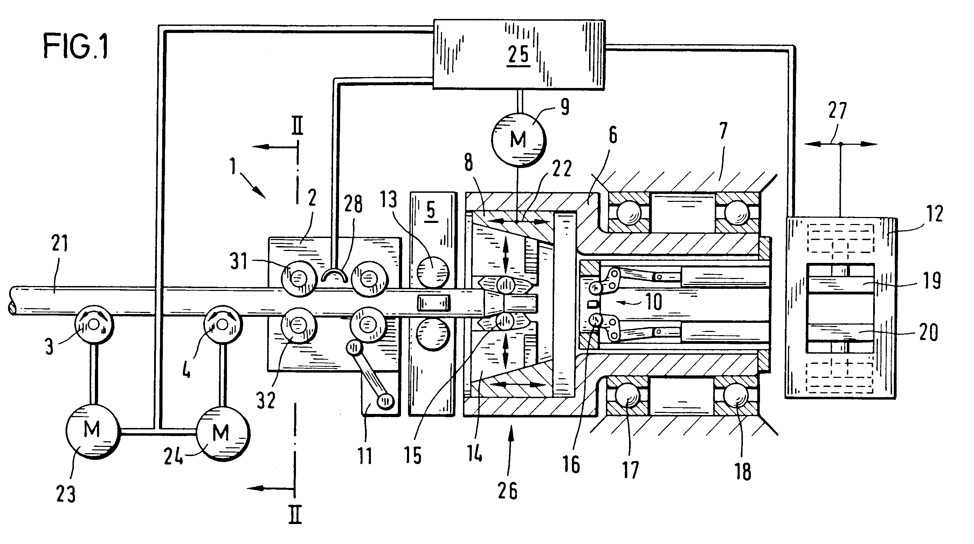

Fig.1 zeigt eine Stange 21, die in einer Schälmaschine 1 geschält wird. Die Schälmaschine besteht aus einem Einschubaggregat 2 mit darin drehbar gelagerten und in nicht dargestellter Weise drehangetriebenen Transportrollen 31, 32, einem Messerkopf 26 an einer Hohlwelle 6, die in einem Maschinengestell 7 auf bekannte Weise in Lagern 17, 18 drehangetrieben aufgenommen ist, einer hinteren Führung 10, die mit ihren Rollen 16 die weiter fortgeschritttene Stange am geschälten Abschnitt einspannt und einem Spannwagen 12, der gemäß Pfeil 27 verfahrbar ist und gegen Ende der Bearbeitung mit seinen Spannbacken 19, 20 die Stange 21 gegen Verdrehen sichert und aus der Schälmaschine herauszieht. Der Arbeitsablauf der Schälmaschine 1 wird von einer Steuereinrichtung 25 bestimmt, an die u.a. das Einschubaggregat 2, und der Stellmotor 9 für die Messer 15 und der Spannwagen angeschlossen sind.

Der Messerkopf 26 befindet sich in einem erweiterten Absatz an der einlaufseitigen Stirnseite der Hohlwelle 6, in der eine Konushülse 8 in Durchlaufrichtung der Stange 21, wie mit dem Pfeil 22 angezeigt, von einem Stellmotor 9 bei umlaufender Hohlwelle 6 verschoben werden kann, mehreren Messerhaltern 14, die sich innen an dem Konus der Konushülse 8 radial abstützen und die bei auialer Verschiebung der Konushülse 8 in radialer Richtung zur Stange 21 verstellt werden. Die Messer 15 an den Messerhaltern 14 schälen entsprechend der Position der Messerhalter und der Konushülse eine Schicht einstellbarer Dicke von der Stange 21 ab. Die Schwingungen des Zerspanungsprozesses am Messerkopf werden von den Rollen 13 und 16 der vorderen und hinteren Führung 5 bzw. 10 gedämpft.

Einlaufseitig der Schälmaschine 1 befindet sich ein offener Rollgang mit von Motoren 23, 24 angetriebenen Zuführrollen 3, 4, die die Stange 21 in den Bereich des Einschubaggregates 2 transportieren.

Das Einschubaggregat 2 sichert die Stange 21 gegen Verdrehen unter dem Schnittmoment, das im Messerkopf 26 in die Stange eingeleitet wird. Zusätzlich bringt es aufgrund eines nicht gezeigten Antriebs der Rollen 31, 32 die Vorschubkraft auf, um die Stange durch den Messerkopf 26 zu schieben. Am Einschubapparat ist eine Wegmeßeinrichtung 11 vorgesehen, die mit einer Impulszählung die gewünschten Weglängen beim Schälen der Stange 21, sicherstellt.

Ausgelöst wird die Wegmessung durch einen Initiator 28 auslaufseitig des ersten Rollenpaares des Einschubaggregates 2.

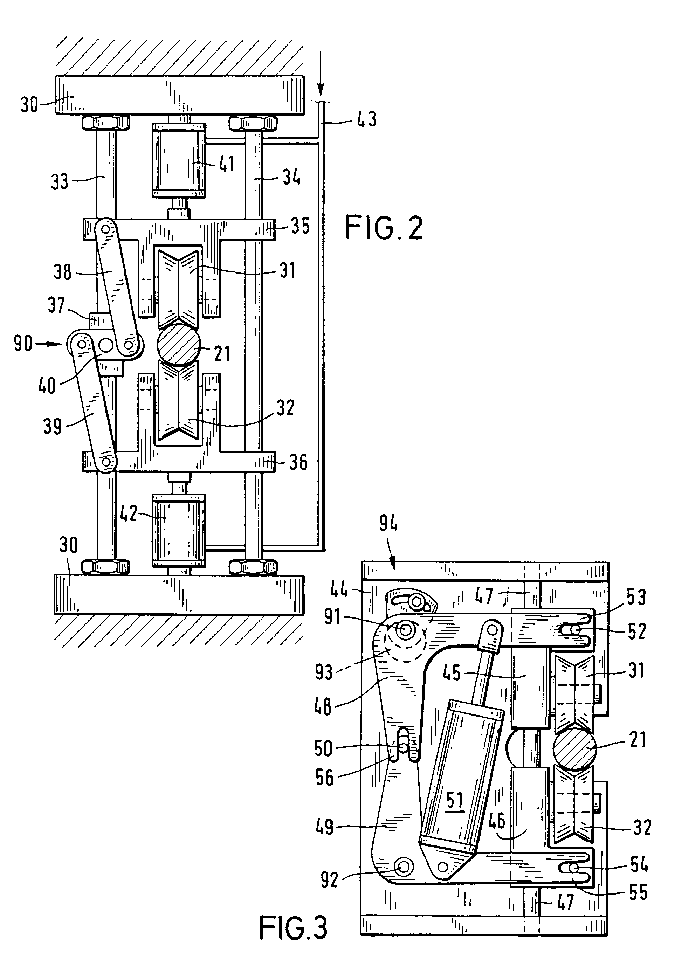

Das in Fig.2 in vereinfachter Darstellung gezeigte Einschubaggregat besteht aus einem Rahmen 30 mit zwei zwischen einem oberen und einem unteren Rahmenteil sich erstreckenden Führungen 33, 34, an denen Schlitten 35, 36 geführt sind. Die Schlitten tragen die Rollen 31, 32, die die Stange 21 zwischen sich einspannen. Die Rollen 31, 32 sind in nicht dargestellter Weise drehangetrieben. Jeder Schlitten wird von einem sich am Rahmen 30 abstützenden Zylinder 41, 42 gegen die runde Stange 21 gedrückt. Beide Zylinder werden aus der gleichen Leitung 43 gespeist. Die Bewegung der Schlitten wird von den Synchronisationsmitteln 90 zentrisch zur gewünschten Spannlage der Stange 21 gesteuert. Die Synchronisationsmittel 90 bestehen aus einem Zentrierstück 37, das an der Führung 33 befestigt ist und die Spannlage der Stange 21 bestimmt, einer Wippe 40, die an dem Zentrierstück drehbar gelagert ist und zwei Koppeln 38, 39, die spiegelbildlich an den Enden der Wippe 40 angelenkt sind. Mit ihren freien Enden sind die Koppeln mit den Schlitten 35, 36 verbunden. Durch die Synchronisationsmittel 90 können sich die Schlitten 35, 36 mit den Spannrollen 31, 32 nur um gleiche Wege in entgegengesetzte Richtungen bewegen. Daraus resultiert eine unveränderliche Spannlage der Stange 21 bzw. ihrer Längsachse. Dies gilt für jeden beliebigen Durchmesser der Stange im Spannbereich des Einschubaggregates.

Zum Ausgleich des Spiels in den Synchronisationsmitteln 90, z.B. an deren Gelenken, ist der Zylinder 42 größer gewählt als der Zylinder 41. Da beide Zylinder mit gleichem Druck aus der Zuführleitung 43 gespeist werden und wegen der erwähnten gleich großen Bewegungen der Schlitten 35, 36 mit den Rollen 31, 32, wird die überschießende Kraft in die Synchronisationsmittel 90 und dadurch in den Schlitten 35 mit der vom Zylinder 41 her kleineren Spannkraft umgeleitet, so daß sich ein Ausgleich der Spannkräfte einstellt. Durch die Umleitung eines Teils der vom Zylinder 42 ausgehenden Spannkraft wird das Spiel in den Synchronisationsmitteln 90 weggedrückt.

Das in Fig.3 dargestellte Einschubaggregat besteht aus einem Rahmen 44, der eine Führung 47 trägt, an der zwei Schlitten 45, 46 mit den Spannrollen 31, 32 angeordnet sind, die die Stange 21 gegen Drehung sichern und in nicht dargestellter Weise senkrecht zur Zeichenebene transportieren. Die Schlitten 45, 46 mit den Rollen 31, 32 werden von Winkelhebeln 48, 49 gegen die Stange 21 gedrückt, deren Bewegung von dem Zylinder 51 gesteuert wird. Die Winkelhebel 48, 49 sind bei 91, 92 gelenkig mit dem Rahmen 44 verbunden und ihre Bewegung ist an ihren freien Enden, die nicht mit den Schlitten 45, 46 verbunden sind, synchronisiert. Dazu ist der Winkelhebel 48 mit einer Gabel 56 an seinem freien Ende versehen, in die ein Zapfen 50 des freien Endes des Winkelhebels 49 eingreift. Die Hebelarme, an denen der Zylinder 51 angreift, sind mit ihren freien Enden in der Spannebene gelenkig mit den Schlitten 45, 46 verbunden. Die gelenkige Verbindung besteht aus je einer Gabel 53, 55, in die schlittenseitig je ein Zapfen 52, 54 eingreift. Der Zylinder 51 ist schräg eingebaut, er greift an unterschiedlich langen Hebelarmen bezogen auf die Anlenkpunkte 91, 92 bzw. die Verbindung mit den Schlitten 45, 46 an den Winkelhebeln 48, 49 an. Der Ausgleich der für die Betrachtung zunächst ungleichen Spannkräfte erfolgt über die Synchronisationsmittel in Form der gelenkigen Verbindung 50, 56 zwischen den freien Armen der Winkelhebel mittig zwischen den Anlenkpunkten 91, 92. Dadurch daß die Gabel 56 und der Zapfen 50 einen Teil der Spannkraft, vorzugsweise ca. 10%, übertragen, arbeitet die Synchronisation spielfrei.

Eine Justierung der Spannlage der Stange 21 ist am Gelenkpunkt 91 vorgesehen. Das Gelenk 91 ist an einem Exzenter 93 ausgebildet, der drehbar im Rahmen 44 gelagert ist. Die Drehlage des Exzenters wird durch eine Vorrichtung 94 gebildet, die einen sektorförmigen Kragen am Exzenter 93 sowie ein darin eingearbeitetes Langloch umfaßt, das mit einer Klemmschraube die Position des Exzenters relativ zum Rahmen 44 fixiert.

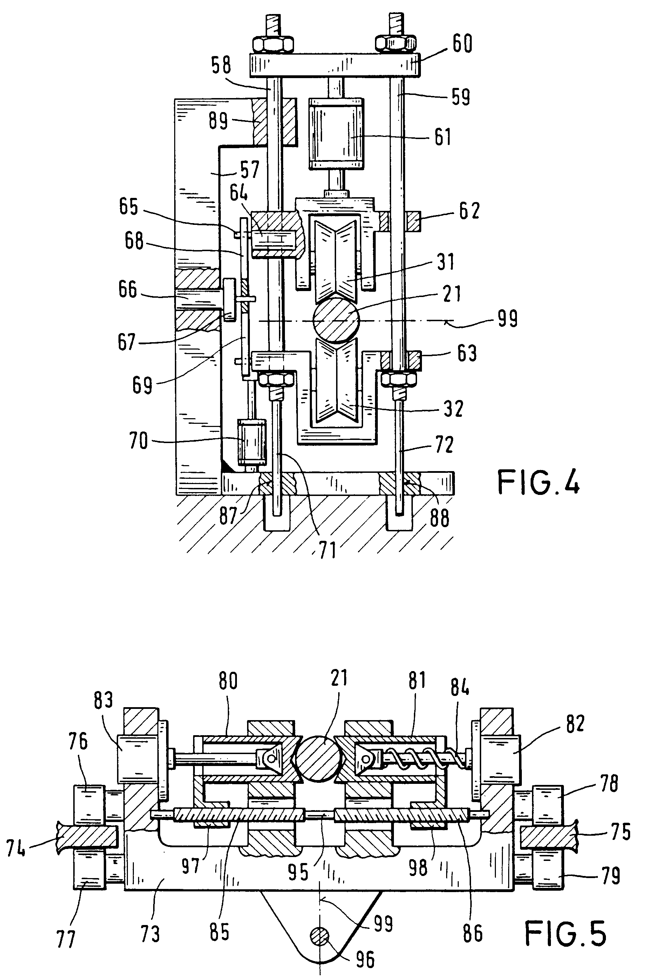

Die in Fig.4 gezeigte Ausführungsform der Erfindung umfaßt einen Rahmen 57, in dem bei 87, 88 und 89 eine Einheit aus den Führungsstangen 58, 59, die durch die Traverse 60 und den Rollenhalter 63 mit der Rolle 32 starr miteinander verbunden sind, beweglich an diesem geführt ist. An den Führungsstangen 58, 59 ist der Schlitten mit der Rolle 31 beweglich geführt. Der Rollenhalter 63 und der Schlitten 62 werden durch den Zylinder 61 gegen die Stange 21 gespannt. Der Rollenhalter 63 und der Schlitten 62 sind in ihrer Bewegung durch eine den Synchronisationsmitteln 90 aus Fig.2 entsprechende Einrichtung mit einer Wippe 67, die im Rahmen 57 mit einem Zapfen 66 drehbar gelagert ist, Koppeln 68, 69, die einerseits an den Enden der Wippe 67 und andererseits mit dem Schlitten 62 bzw. dem Rollenhalter 63 beweglich verbunden sind, synchronisiert. Das Gewicht der Einheit aus den Führungsstangen 58, 59, der Traverse 60 , dem Schlitten 62 und dem Rollenhalter 63 mit den zugehörigen Rollen hängt an den Synchronisationsmitteln und letztlich an dem Zapfen 66 der Wippe 67. Zusätzlich ist ein Vorspannzylinder 70 vorgesehen, der das Gewicht der Einheit ergänzt. Der Zylinder kann drucklos geschaltet oder weggelassen werden, wenn das Gewicht der Einheit ausreicht, um in den meisten Betriebsfällen den Spielausgleich in den Synchronisationsmitteln sicherzustellen.

Die in Fig.5 gezeigte Ausführungsform einer Spanneinrichtung kommt für den Spannwagen 12 aus Fig.1 in Betracht. Der Spannwagen besteht aus einem Gehäuse 73, das mit Rollen 76, 77, 78, 79 an ortsfesten Führungen beweglich ist und umfaßt im Gehäuse 73 geführte Spannbacken 80, 81, die von Zylindern 82, 83 betätigt werden, um die Stange 21 einzuspannen. Bei 96 greift der Antrieb für den Spannwagen an. Die Bewegung der Spannbacken 80, 81 wird durch die Gewindespindel 95 synchronisiert. Letztere besteht aus zwei Gewindeabschnitten 85, 86 mit gegenläufiger aber betragsmäßig gleicher Gewindesteigung. Die Gewindespindel 95 stützt sich beidseitig im Gehäuse73 des Spannwagens ab. Starr mit den Spannbacken 80, 81 sind Muttergewindestücke 97, 98 verbunden, in die die Gewindeabschnitte 85, 86 eingeschraubt sind. Die Spannbacken 80, 81 fahren wegen der Synchronisation durch die Spindel zentrisch zur Spannwagenmitte 99 auseinander und zusammen.

Eine Feder 84 drückt die gesamte Synchronisation spielfrei. Sie ist hierzu ergänzend zu dem Zylinder 82 zwischen dem Gehäuse und der Spannbacke 81 angeordnet und spannt die Synchronisationsmittel vor.

## Patentansprüche

1. Spannvorrichtung zum gezielten Spannen von unterschiedlich großen Werkstücken (21), mit einem in einem Rahmen (30) bewegbaren ersten Spannelement (35) und einem im Rahmen (30) bewegbaren zweiten Spannelement (36), wobei das erste Spannelement (35) und das zweite Spannelement (36) das Werkstück (21) an dessen gegenüberliegenden Seiten einspannen, mit mindestens einem Trieborgan (41, 42), das zum Bewegen des ersten Spannelementes (35) mit einer ersten Kraft und zum Bewegen des zweiten Spannelementes (36) mit einer zweiten Kraft am Rahmen (30) befestigt ist, mit Synchronisationsmitteln (90) zur Synchronisation der Bewegung der beiden Spannelemente (35, 36) gegen das Werkstück (21), wobei die Synchronisationsmittel (90) mit jedem der Spannelemente (35, 36) verbunden sind und ein Teil der Spannkraft durch die Synchronisationsmittel (90) derart übertragen wird, daß die von den Spannelementen (35, 36) ausgeübten Kräfte gleich groß sind, **dadurch gekennzeichnet**, daß die erste Kraft und die zweite Kraft unterschiedlich groß sind.

2. Spannvorrichtung nach Anspruch 1, **dadurch gekennzeichnet**, daß die von den Synchronisationsmitteln (90) übertragene Spannkraft kleiner ist als die Hälfte der gesamten Spannkraft.

3. Spannvorrichtung nach Anspruch 1 oder 2, **dadurch gekennzeichnet**, daß ein zusätzliches Trieborgan (70) vorgesehen ist, das unmittelbar nur auf ein Spannelement (35, 36, 80, 81) einwirkt und dieses vorspannt.

4. Spannvorrichtung nach einem der Ansprüche 1 bis 3, **dadurch gekennzeichnet**, daß die Spannelemente (35, 36) jeweils mindestens eine Spannrolle (31, 32) aufweisen.

5. Spannvorrichtung nach einem der Ansprüche 1 bis 4, **dadurch gekennzeichnet**, daß sie vor oder hinter dem umlaufenden Messerkopf (26) einer spitzenlosen Schälmaschine (1) angeordnet ist.

6. Spannvorrichtung nach einem der Ansprüche 1 bis 5, **dadurch gekennzeichnet,** daß die Spannlage des gespannten Werkstückes (21) verstellbar ist.

## Claims

1. Clamping device for the specific clamping of workpieces (21) of varying sizes, comprising a first clamping element (35) movable in a frame (30) and a second clamping element (36), whereby the first clamping element (35) and the second clamping element (36) clamp the work member (21) on opposite sides thereof, with at least one driving member (41, 42) is fastened to the frame (30) for moving the first clamping element (35) with a first force and for moving the second clamping element (36) with a second force, synchronizing means (90) for the synchronization of the movement of the two clamping elements (35, 36) against the workpiece (21), whereby the means for synchronization (90) are connected to each of the clamping elements (35, 36) and part of the tension is conveyed by the sychronization means (90) in such a manner that the force exerted by the clamping elements (35, 36) is of the same magnitude, characterized in that said first force and said second force are of a different magnitude.

2. Clamping device according to claim 1, charcterized in that the tension conveyed by the synchronizing means (90) is smaller than half as large as the overall tension.

3. Clamping device according to claim 1, characterized in that an additional driving member (70) is provided which directly affects and applies pretension to only one of the clamping elements (35, 36; 80, 81).

4. Clamping device according to claims 1 to 3, characterized in that the clamping elements (35, 36) each comprise at least one tension roller (31, 31).

5. Clamping device according to one of the claims 1 to 4, characterized in that it is located before or behhind the rotary cutter head (26) of a centerless peeling device.

6. Clamping device according to one of the claims 1 to 5, characterized in that the clamping position of the clamped work member (21) is adjustable.

## Revendications

1. Dispositif de serrage pour le serrage déterminé de pièces à usiner (21) de taille différente, avec un premier élément de serrage (35) déplacable dans un châssis (30) et un deuxième élément de serrage (36) déplaçable dans le châssis (30), où le premier élément de serrage (35) et le deuxième élément de serrage (36) serrent la pièce à usiner (21) à ses faces opposées, avec au moins un organe de commande (41, 42) fixé au châssis (30) pour déplacer le premier élément de serrage (35) avec une première force et pour déplacer le deuxième élément de serrage (36) avec une deuxième force, avec des moyens de synchronisation (90) pour la synchronisation du déplacement des deux éléments de serrage (35, 36) contre la pièce à usiner (21), où les moyens de synchronisation (90) sont reliés à chacun des éléments de serrage (35, 36) et où une partie de la force de serrage est transmise par les moyens de synchronisation (90) de manière que les forces exercées par les éléments de serrage (35, 36) soient identiques, dispositif de serrage caractérisé en ce que la première force et la deuxième force sont de grandeur différente.

2. Dispositif de serrage suivant revendication 1, caractérisé en ce que la force de serrage transmise par les moyens de synchronisation (90) est plus petite que la moitié de la force de serrage totale.

3. Dispositif de serrage suivant revendication 1 ou 2, caractérisé en ce qu'il est prévu un organe de commande additionnel (70) n'agissant directement que sur un seul élement de serrage (35,36; 80,81) et préserrant celui-ci.

4. Dispositif de serrage suivant une des revendications 1 à 3, caractérisé en ce que les éléments de serrage (35, 36) présentent chacun au moins un galet de serrage (31, 32).

5. Dispositif de serrage suivant une des revendications 1 à 4, caractérisé en ce qu'il est disposé devant ou derrière la tête porte-lames tournante (26) d'une machine à écroûter sans centre (1).

6. Dispositif de serrage suivant une des revendications 1 à 5, caractérisé en ce que la position de serrage de la pièce à usiner (21) serrée est réglable.
